# EUROPEAN PATENT SPECIFICATION

(11) **EP 4 311 959 B1**
(45) Date of publication and mention of the grant of the patent: **19.03.2025**
(21) Application number: 23186074.3
(22) Date of filing: 18.07.2023
(51) Int. Cl.: F16J 15/34

(54) **MECHANICAL SEAL**
GLEITRINGDICHTUNG
JOINT MÉCANIQUE

(30) Priority: 27.07.2022 IT 202200015921
(43) Date of publication of application: 31.01.2024
(73) Proprietor: Fluiten Italia S.p.A., 20154 Milano (IT)
(72) Inventor: COLOMBO, Alberto Delfo, deceased (IT); ZUCCON, Luca, 20831 SEREGNO (MONZA BRIANZA) (IT); ABBRUZZINO, Vincenzo Antonio, 20017 RHO (MILANO) (IT)
(74) Representative: Inchingalo, Simona

(56) References cited:
- EP-A1- 0 371 587
- EP-A1- 3 643 950
- WO-A1-89/08782
- DD-A1- 216 772
- JP-U- S5 368 866

## Description

The present invention relates to a mechanical seal.

Mechanical seals are devices that can be applied to rotating shafts to prevent fluid leakage and can withstand high pressure and mechanical stress.

Mechanical seals are used, for example, in centrifugal pumps and in motor boats in which a shaft transmits rotational motion from an engine, located inside a boat, to a propeller, which is completely submerged in water, to prevent liquid from entering the boat through the shaft.

Nowadays, a mechanical seal is realised by a pair of annular bodies, one stationary and one rotating sealing body, placed around a drive shaft and in relative motion with respect to each other when the drive shaft is driven; the two annular bodies are coaxial and coupled frontally so that a circular crown face of one is in contact with that of the adjacent annular body.

The rotating annular body is kept in contact with the stationary one by elastic means that push it axially against the stationary body. Preferably, such elastic means consist of a wave spring with a substantially annular profile.

During rotation, a minimal amount of fluid, sufficient to lubricate and prevent overheating, seeps through the two annular bodies without, however, escaping into the environment to be insulated.

With particular reference to the rotating part, it generally comprises a sealing element, presenting the sealing surface, and an annular body integrally connectable to a rotating shaft in such a way as to ensure a seal thereon.

In order to allow for mutual flotation of the sealing element and the annular body, they are coupled with clearance along the rotation axis of the shaft, so that they are free to make a limited and controlled translation in the axial direction. The wave spring, having a substantially annular profile, is placed between the sealing element and the annular body to absorb such axial movements and maintain mutual pressure between the coupling surfaces.

In order to enable the transfer of rotational motion from the annular body to the sealing element, it is known to make a shape coupling between the two. In particular, two teeth are made on the annular body at the level of the annular head surface and away from it. These teeth have an axial extension equal to the axial extension of the sealing element and are diametrically opposed. Corresponding counter-seats for such teeth are formed on the sealing element in order to transfer rotational motion from the annular body to the sealing element by means of a rotational shaped coupling between such teeth formed on the annular body and such counter-seats formed on the sealing element.

Disadvantageously, the teeth have a large extension, so this solution is excessively costly due to the process of obtaining these teeth on the annular body, which are in fact obtained by removal of material, generating considerable waste of the material removed, and therefore considerable costs.

Even more disadvantageously, these teeth, being subject to considerable mechanical stress, must undergo a process of ion nitriding or hardening in order to make them stronger. Unfortunately, this process is expensive and, together with the costs related to the manufacturing process by material removal, results in an uneconomical product.

In order to obviate the costs of the material removal procedure for obtaining teeth at the level of the annular body, it is known to transfer the rotational motion from the annular body to the sealing element by means of the elastic means between them, as described in EP3643950A1. In particular, such elastic means comprise a wave spring, interposed between the annular body and the sealing element, having a substantially annular profile and presenting a plurality of teeth, one for each wave of the spring, diametrically opposed and extending on the surface in which the spring itself lies, alternating teeth projecting towards the inside and towards the outside of the annular profile defined by the spring. In EP3643950A1 there are two diametrically opposite teeth protruding inwards and two diametrically opposite teeth protruding outwards.

In more detail, the teeth protruding towards the inside of the annular profile defined by the spring are configured to engage respective radially through recesses made in the annular body, while the teeth protruding towards the outside of the annular profile defined by the spring are configured to engage respective recesses made in the sealing element.

Disadvantageously, during assembly of the seal, the annular body and the sealing element can become axially detached, creating problems and forcing the assembly actions to be repeated several times before the correct configuration is achieved.

Furthermore, disadvantageously, the teeth protruding towards the outside of the annular profile defined by the spring rest in the respective recesses made in the sealing element, thus generating a distribution of the forces generated by the wave spring that is not uniform, but rather concentrated in the limited support areas. In addition to the above, the inner and outer teeth of the wave spring have sharp edges, which can disadvantageously cause potential injuries during assembly and disassembly of the mechanical seal.

Finally, known mechanical seals are generally made of AISI 316 steel, which is particularly resistant to corrosion. In this case, the stationary body is generally made of silicon carbide and it is necessary to place an insert of sacrificial material, usually graphite, between the stationary and the rotating sealing body. However, this solution is not very environmentally friendly as the graphite insert must be sealed on a circular crown surface of the sealing element using a polluting agent. In addition, graphite, which is also a polluting agent, being porous, needs to be impregnated with antimony, a material that is toxic and polluting even though it withstands high temperatures. Even more disadvantageously, the rotating part, comprising a graphite insert sealed to it, requires a separation of the graphitic portion from the metal portion during disposal.

A further mechanical seal, comprising an annular body, a sealing element and a wave spring, whereby the wave spring is rotationally constrained to the annular body and and the sealing element is rotationally constrained to the wave spring, is known from WO8908782A1.

In this context, the technical task underlying the present invention is to propose a mechanical seal that overcomes at least some of the drawbacks of the prior art mentioned above.

In particular, it is the purpose of the present invention to provide a mechanical seal that ensures versatile and safe assembly for the operator.

A further aim of the present invention is to provide a mechanical seal that ensures environmental sustainability in production and disposal.

The defined technical task and the specified aims are substantially achieved by a mechanical seal comprising the technical characteristics set forth in one or more of the appended claims.

In particular, there is an initial rotationally-shaped constraint between the annular body, integral with a drive shaft, and the wave spring. There is also a second rotationally-shaped constraint between the wave spring and the sealing element.

By means of the aforementioned first and second rotational constraints, it is therefore possible to transfer the rotation of the annular body, integral with a drive shaft, to the wave spring and thus to the sealing element.

According to an aspect of the present invention, the aforementioned first rotational constraint between the annular body and the wave spring is defined by a bayonet coupling.

The bayonet coupling also defines an axial restraint between the annular body and the wave spring aimed at preventing them from detaching from each other along the rotation axis.

More specifically, the axial constraint is configured to be reversibly activated by a relative rotation between the wave spring and the annular body.

In this way, the annular body and the spring, which is integral with the sealing element, are not only rotationally, but also axially, constrained, thus providing greater versatility when installing the seal.

The dependent claims correspond to possible embodiments of the invention.

Preferably, the sealing element has at least one outer recess, preferably one for each wave of the wave spring, and the wave spring has at least one outer tooth, preferably one for each wave of the wave spring, protruding away from the rotation axis and configured to engage the outer recess to define the mentioned second rotationally-shaped constraint. Even more preferably, the outer recess has a depth greater than the radial extension of the outer tooth so that an area of the wave spring adjacent to the outer tooth defines an extended support surface between the wave spring and the sealing element in the deformed condition of the wave spring itself. Therefore, the outer tooth is free to move within the outer recess, resulting in a uniform and extended distribution of the forces generated by the wave spring over a section of the wave spring itself. Preferably the annular body is made of AISI 316, while the sealing element when integral, i.e. without the graphite or silicon insert, is preferably made of chromium steel. This makes it possible to realise an environmentally friendly mechanical seal that avoids the pollution caused by the use of the graphitic insert between the rotating part and the stationary body.

Further features and advantages of the present invention will become more apparent from the approximate and thus non-limiting description of a preferred, but non-exclusive, embodiment of a mechanical seal.

Such description will be set forth herein below with reference to the accompanying drawings, provided for merely indicative and therefore non-limiting purposes, wherein:
- figure 1 shows a sectional view in a radial plane of a first embodiment of a mechanical seal comprising a graphitic insert sealed onto the sealing element,
- figure 2 shows a cross-sectional view in a radial plane of a second embodiment of the mechanical seal, made entirely of metal material, preferably AISI 316 and chromium steel (Y1), without including a graphitic insert,
- figure 3 shows a sectional view in a radial plane of a third embodiment of a mechanical seal comprising a graphitic insert sealed onto the sealing element,
- figure 4 shows a cross-sectional view in a radial plane of an annular body, comprised in the rotating part of the mechanical seal in accordance with the first and second embodiments,
- figure 5 shows a cross-sectional view in a radial plane of an annular body, which is comprised in the rotating part of the mechanical seal in accordance with the third embodiment,
- figure 6A is a sectional view according to the track VI-VI of figure 6,
- figure 6B shows a variant of the sealing element illustrated in figure 6A;

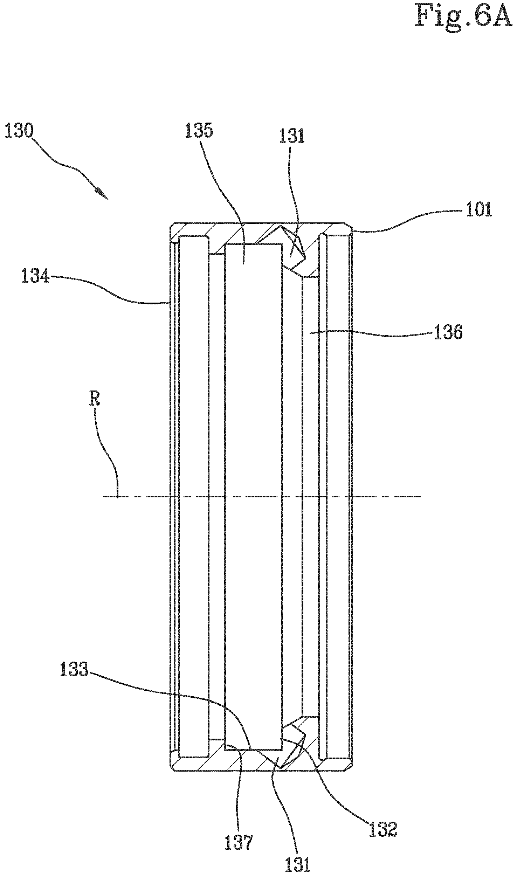

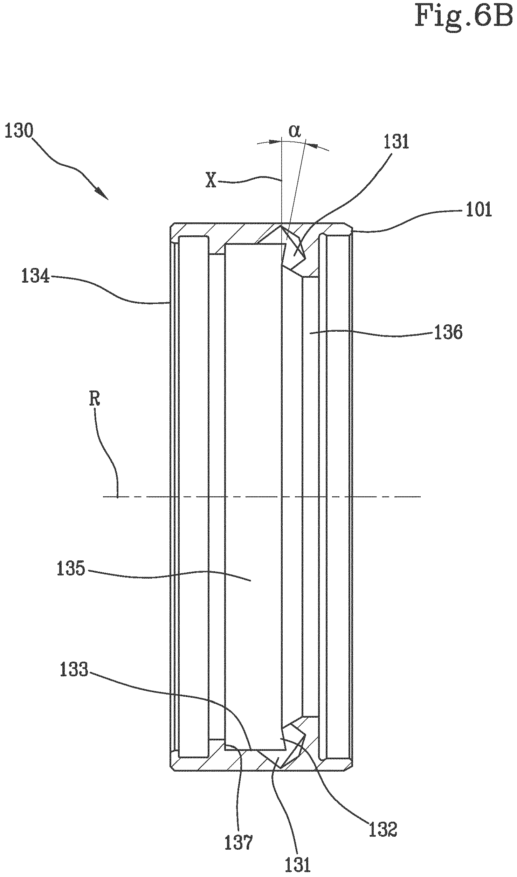

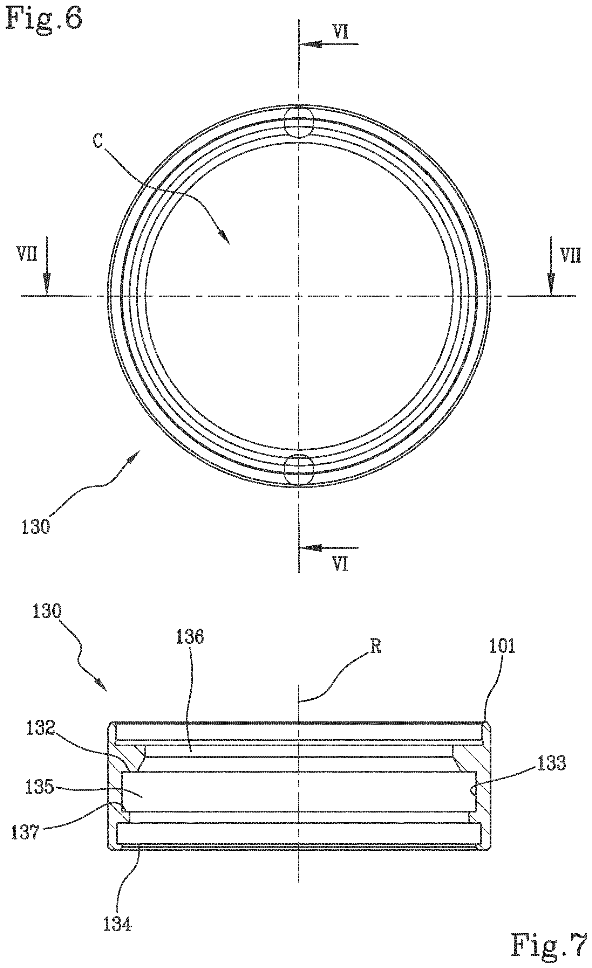

- figure 6 shows a front view of a sealing element, which is comprised in the rotating part of the mechanical seal,
- figure 7 is a sectional view according to the track VII-VII of figure 6,

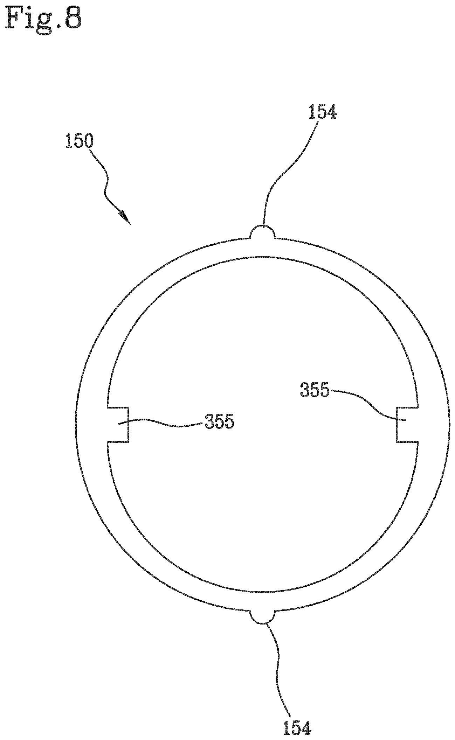

- figure 8 shows a front view of elastic means comprised in the rotating part and interposed between the annular body and the sealing element according to the third embodiment,

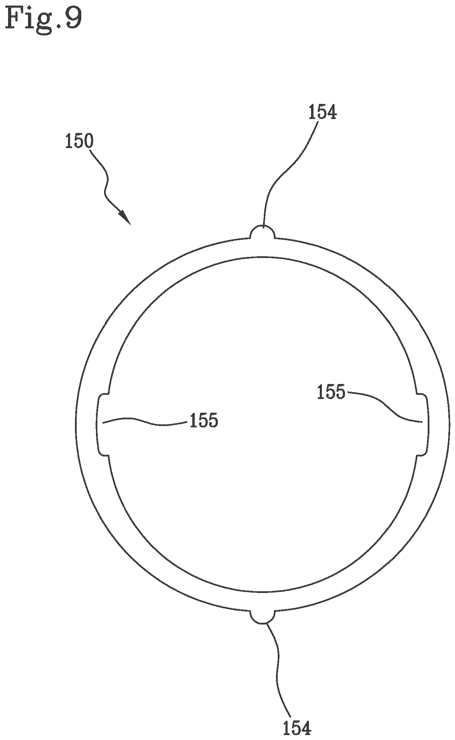

- figure 9 shows a front view of elastic means comprised in the rotating part and interposed between the annular body and the sealing element according to the first and second embodiments,

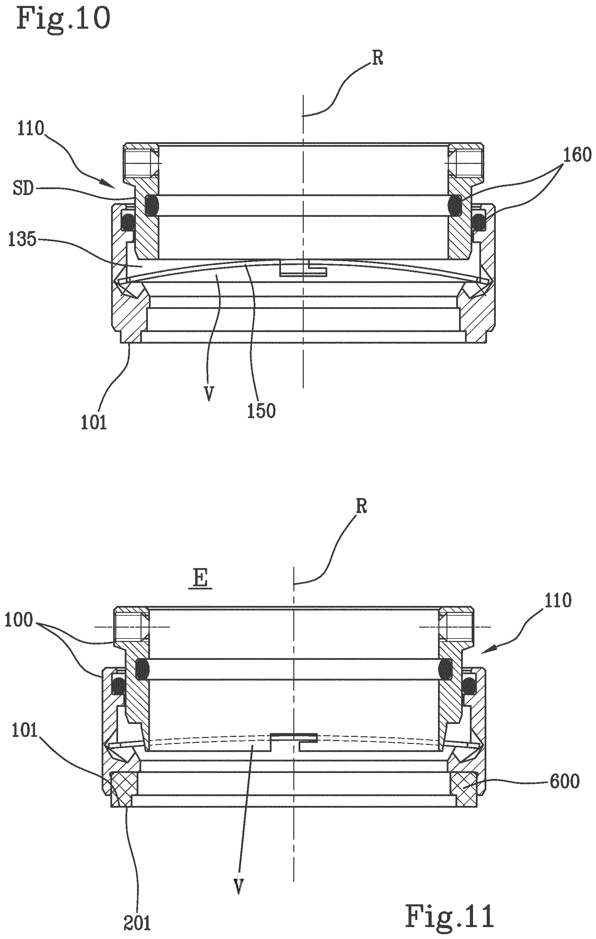

- figure 10 shows a sectional view in a radial plane of the rotating part of the mechanical seal according to the second embodiment thereof,
- figure 11 shows a sectional view in a radial plane of the rotating part of the mechanical seal according to the third embodiment thereof.

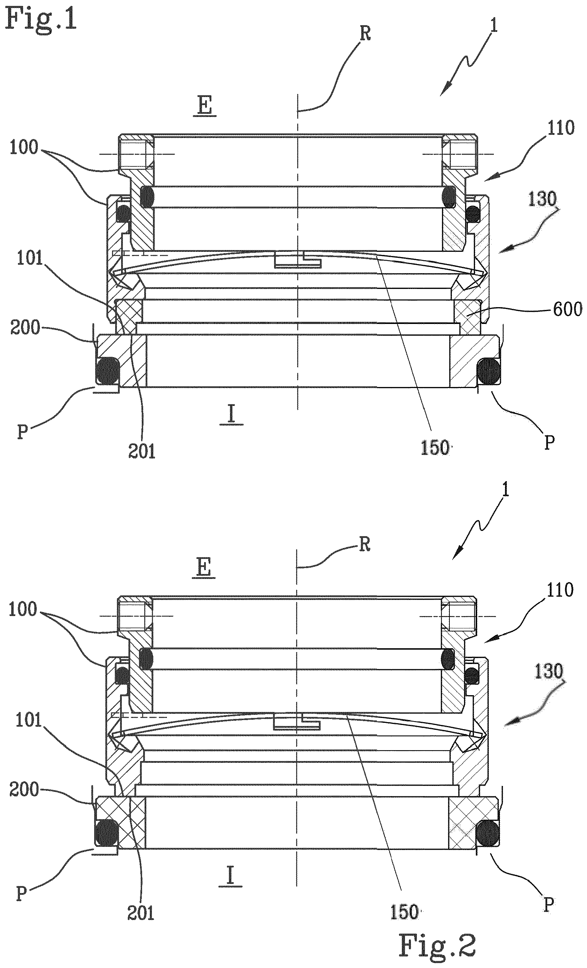

With reference to Figures 1-4, a mechanical seal is referred to generically with the numerical reference 1 and will be referred to hereafter with the notation "mechanical seal 1".

The mechanical seal 1 is applicable to a fixed wall "P" and a non-illustrated rotatable shaft passing through an opening in the wall "P", so as to generate a fluid seal through that opening, in particular to isolate a first side of the wall "P" from a fluid present at an opposite second side thereof. The wall "P" forms, for example, part of the hull of a boat and the rotating shaft passes through an opening in it to transmit motion from the engine, located on board the boat, to the propeller, located outside the hull. In this type of application, the mechanical seal 1 isolates the inside of the hull from the water on the outside of the hull.

In the context of this description, the outer side "E" is indicated as the side of the mechanical seal 1 exposed to the fluid to be contained, and the inner side "I" as the side opposite the outer side "E".

The mechanical seal 1 comprises a rotating part 100 and a fixed part 200. The rotating part 100 is connected integrally to a rotating shaft via a first fluid-tight coupling and the fixed part 200 is integrally connectable to the wall "P" via a second fluid-tight coupling.

The rotating part 100 and the fixed part 200 have respective coupling surfaces, in particular a rotating coupling surface 101 and a static coupling surface 201, which are arranged in abutment and pressed against each other so as to slide mutually during the rotation of the rotating shaft and generate a fluid seal.

The rotating part 100 comprises an annular body 110 and a sealing element 130, both of which are essentially bushed bodies, extending around a rotation axis "R" and essentially coaxial.

In particular, the annular body 110 can be integrally connected to the rotating shaft and rotates together with it about the rotation axis "R".

More specifically, the diameter of the annular body 110 is smaller than the diameter of the sealing element 130, so that the first body can be inserted into the second element.

The rotating part 100 also comprises elastic means 150 interposed between the annular body 110 and the sealing element 130.

The sealing element 130, illustrated in figures 6A, 6B, 6 and 7, has a central cavity "C" adapted to accommodate the rotating shaft and the annular body 110 integral with it.

The sealing element 130 comprises the rotating coupling surface 101 described above and is coupled to the annular body 110 so as to be movable with respect to it (and with respect to the rotating shaft) along the rotation axis "R". It is thus possible to maintain contact of the rotating coupling surfaces 101 and static coupling surfaces 201 following a translation of the rotating shaft and the annular body 110 connected thereto.

Preferably, the sealing element 130 has a cylindrical mouth 134 for access to the central cavity "C" adapted to accommodate at least a portion of the annular body 110.

Moreover, the sealing element 130 preferably has a channel 136, in communication with the mouth 134, defining a portion of the cavity "C" having a smaller diameter than the mouth 134 and preferably dimensioned so as to allow a flush or fluid-tight coupling with the rotating shaft.

Preferably, the sealing element 130 has an inner annular groove 135 facing the rotation axis "R" and preferably interposed between the mouth 134 and the channel 136.

Preferably, the annular groove 135 has a larger diameter than the mouth 134 and the channel 136, so as to define an annular surface 133 extending around the rotation axis "R", a hitting shoulder 132 extending normal to the rotation axis "R" and arranged between the annular surface 133 and the channel 136 and, preferably, a containment shoulder 137 arranged between the annular surface 133 and the mouth 134.

The sealing element 130 also has at least one external recess 131, preferably two and diametrically opposed.

In the preferred embodiment, illustrated in figure 6B, the outer recesses 131 are partially obtained at the hitting shoulder 132 and the annular surface 133, these recesses are also inclined in relation to the hitting shoulder 132.

The mechanical seal 1 further comprises elastic means active between the annular body 110 and the sealing element 130 to keep the rotating coupling surface 101 pressed against the static coupling surface 201.

These elastic means are also configured to allow a mutual position adjustment along the rotation axis "R" between the annular body 110 and the sealing element 130, for example as a result of translational movements of the rotatable shaft along the rotation axis "R" with respect to the wall "P".

Advantageously, the elastic means comprise a wave spring 150 illustrated in two different embodiments in figures 10 and 11. The wave spring 150 has a substantially annular shape, preferably two-wave and preferably shaped like a closed loop.

The wave spring 150 is preferably housed in the sealing element 130, even more preferably in the annular groove 135, and has an outer profile, thus distal from the rotation axis "R", substantially countershaped to the annular surface 133. Preferably, the wave spring 150 has an inner diameter at least coincident with the diameter of the containment shoulder 137 and the mouth 134 so as to protrude with respect to them towards the rotation axis "R".

Preferably, the containment shoulders 137 and hitting shoulders 132 are configured to engage the wave spring 150 in a fully extended configuration to define a maximum, or limit stop, extension along the rotation axis "R" coincident with the width of the annular groove 135.

In the preferred embodiment, the width of the annular groove 135 is less than the axial extension of the wave spring 150 in the unloaded configuration, resulting in pre-compression.

In addition, in the preferred embodiment shown in figure 6B, the hitting shoulder 132 has an inclination of less than 90°, preferably equal to 80°, to the rotation axis "R", as can be seen in figure 9b. In other words, the hitting shoulder 132 is inclined with respect to a plane X, orthogonal to the rotation axis "R", by an angle α comprised between 5° and 15°, preferably 10°.

Advantageously, the aforementioned technical feature promotes lower stress on the wave spring 150, thus allowing for a longer service life thereof.

Even more advantageously, the aforementioned inclination of the hitting shoulder 132 avoids edge contact between the spring 150 and the shoulder 132 itself, thus limiting possible notching and wear of the sealing element 130.

The wave spring 150 also has at least one outer tooth 154, preferably one for each wave of the wave spring 150, protruding away from the rotation axis "R". Preferably, this external tooth 154 has a curvilinear profile.

Each outer tooth 154 is made along an outer perimeter edge of the wave spring 150.

Each outer tooth 154 is also configured to fit within a respective outer recess 131 of the sealing element 130.

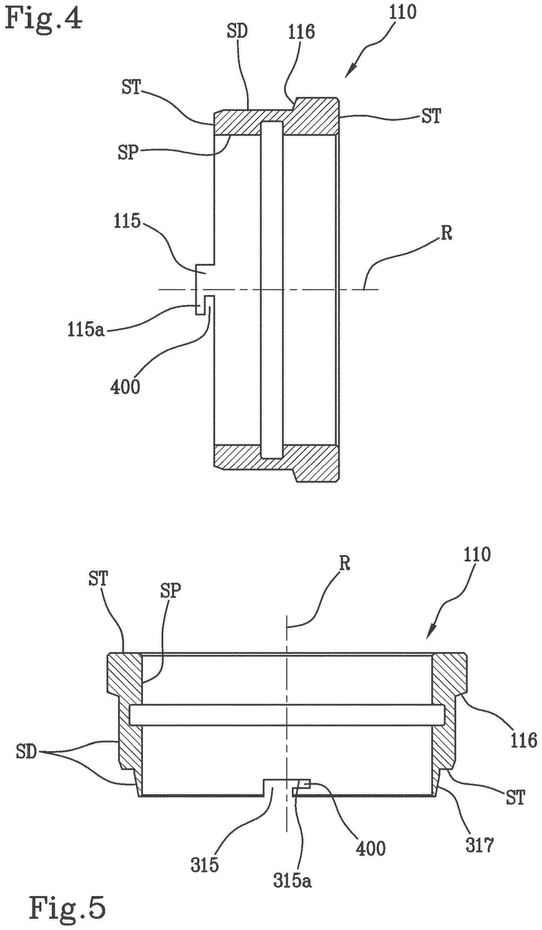

The annular body 110 is preferably a substantially bushed body extending around the rotation axis "R" as illustrated, in two of its embodiments, in figures 4 and 5.

The annular body 110 has a side surface "SP" proximal to the rotation axis "R", a side surface "SD" distal to the rotation axis "R" and two annular head surfaces "ST", one external, exposed to the fluid to be contained, and one internal, its opposite. In particular, the head surfaces ST extend around the rotation axis "R".

The annular body 110 is configured to fit inside the cavity "C" of the sealing element 130, more precisely in its mouth 134. In other words, considering the mechanical seal 1 in its entirety, the annular body 110, by means of its distal lateral surface "SD", is smoothly inserted into the sealing element 130, and the wave spring 150 is interposed between the two.

In addition, the annular body 110 preferably has an abutment shoulder 116 formed on its distal side surface "SD" and adjacent to the outer portion of the mechanical seal 1. The annular body 110, when inserted into the sealing element 130, is free to slide inside the same until it comes to rest at the abutment shoulder 116.

Considering the rotating part 100 in its entirety, the wave spring 150 is interposed between an annular head surface "ST" of the annular body 110 and the hitting shoulder 132 of the sealing element 130: the wave spring 150 is therefore arranged to be pressed against them to be_compressed during a mutual approach of the annular body 110 and the sealing element 130 along the rotation axis "R".

Even more preferably, as shown in figures 10 and 11, the annular body 110 is coupled to the sealing element 130 so that the distal side surface "SD" faces the annular groove 135 to define, in cooperation therewith, an at least partially closed housing volume "V" for the wave spring 150.

The rotating part 100 comprises sealing means 160, e.g. one or more O-rings, interposed between the annular body 110 and the sealing element 130 to advantageously seal the housing volume "V" of the wave spring 150 at least with respect to the fluid present on the outer side "E" to the mechanical seal 1.

The wave spring 150 has a first rotationally-shaped coupling with the annular body 110 configured to rotationally constrain the wave spring 150 to the annular body 110 around the rotation axis "R".

Advantageously, such a first rotationally-shaped coupling is able to transfer the rotation of the annular body 110, integral with a drive shaft, to the wave spring 150.

In addition, the wave spring 150 has a second rotationally-shaped coupling with the sealing element 130 configured to rotationally constrain the sealing element 130 to the wave spring 150 around the rotation axis **"R".**

Specifically, such a second rotationally-shaped coupling results in the insertion of an outer tooth 154 of the wave spring 150 into a respective outer recess 131 of the sealing element 130.

In other words, an outer tooth 154 is configured to engage an outer recess 131 in order to define such a second rotationally-shaped coupling between the wave spring 150 and the sealing element 130.

The outer recess 131 has a greater depth than the radial extension of an outer tooth 154. In other words, the wave spring 150, instead of resting with one end of the outer tooth 154 inside the cavity defined by the outer recesses 131, rests at the level of the hitting shoulder 132. Consequently, the wave spring 150 rests on the hitting shoulder 132 with an area adjacent to at least one outer tooth 154, the latter thus remaining free from mechanical stress.

When the spring 150 is in a deformed configuration, i.e. when the annular body 110 and the sealing element 130 are in close proximity along the rotation axis "R", this feature is convenient allowing the definition of a support surface between the wave spring 150 and the sealing element 130 coinciding with an area of the wave spring 150 adjacent to its outer tooth 154 and varying with the degree of compression thereof.

Advantageously, it is therefore possible to achieve a distribution of the forces generated by the wave spring 150 that is uniform and promotes homogeneous wear at the rotating coupling surface 101 between the rotating 100 and fixed 200 parts.

Considering the mechanical seal 1 in its entirety therefore, the first rotationally-shaped coupling results in a rotational constraint between the annular body 110 and the spring 150 which, being constrained to the sealing element 130 by the second rotationally-shaped coupling, results in a rotational constraint between the annular body 110 and the sealing element 130.

In other words, thanks to the interposition of the wave spring 150 between the annular body 110 and the sealing element 130, these are both constrained to rotate about the rotation axis "R" integrally with a rotating shaft.

Furthermore, thanks to the interposition of the wave spring 150 between the annular body 110 and the sealing element 130, they can move mutually along the rotation axis "R", however counteracted by the axial action of the wave spring 150.

The wave spring 150 also has an axially-shaped coupling with the annular body 110, which is configured to axially constrain the wave spring 150 and the annular body 110 so as to prevent them from detaching from each other along the rotation axis "R".

More specifically, this axially-shaped coupling is configured to be reversibly activated upon relative rotation between the wave spring 150 and the annular body 110.

In detail, this axially-shaped coupling is a bayonet coupling defined by a circumferential housing 400 obtained in the annular body 110 as illustrated in figures 4 and 5, the latter relating to two different embodiments.

The axially-shaped coupling between the wave spring 150 and annular body 110 results in a bayonet coupling between the two and is achieved by keeping the annular body 110 stationary and rotating the sealing element 130, in which the spring 150 is inserted, or vice versa.

In accordance with the first and second embodiments of the mechanical seal 1 according to the present invention, illustrated in figures 1 and 2 respectively, the axially-shaped coupling is realised by means of a housing 400 formed in the annular body 110 and a respective recess 155 formed in the wave spring 150, as illustrated in figures 4 and 9 respectively.

In particular, with reference to figure 4, the annular body 110 in its first embodiment has at least one tooth 115, preferably two and diametrically opposed.

The tooth 115 extends axially and away from the respective annular head surface "ST" of the annular body 110.

Preferably, the tooth 115 has a radial thickness less than a radial thickness of the annular head surface "ST" from which it extends. Even more preferably, the tooth 115 is arranged proximal to the rotation axis "R".

Advantageously, the tooth 115 has at least one appendage 115a extending in a circumferential direction with respect to the rotation axis "R", defining the circumferential housing 400. More specifically, the appendage 115a appears to be positioned distally with respect to an annular head surface "ST".

Conveniently, the tooth 115 has a lower axial extension than the axial extension of the sealing element 130.

With reference to figure 9, the wave spring 150 in a first embodiment has at least one axially pass-through recess 155 formed in a portion of the wave spring 150 facing the rotation axis "R", the recess 155 also being open towards the rotation axis "R". Preferably, the wave spring 150 has a recess 155 for each of its waves; even more preferably, there are two such recesses, square in shape and diametrically opposed.

Each recess 155 is obtained along an inner perimeter edge of the wave spring 150, preferably by defining a counter-seat for a respective tooth 115.

In the preferred embodiment illustrated in figure 9, the wave spring 150 has two inner recesses 155, diametrically opposite the centre of extension of the wave spring 150, and two outer teeth 154, also diametrically opposite the centre of extension of the wave spring 150 and angularly spaced 90° apart from the inner recesses 155.

Considering the mechanical seal 1 subject matter of the present invention in its first (figure 1) and second (figure 2) embodiments, the housing 400 of the annular body 110 is configured to engage the wave spring 150 in a portion thereof adjacent to a recess 155 thereof as a result of relative rotation between the wave spring 150 and the annular body 110.

More specifically, following a relative rotation between the wave spring 150 and the annular body 110, the appendage 115a of the annular body 110 is able to oppose the mutual axial detachment between the wave spring 150 and the annular body 110.

In other words, the housing 400 is configured to define a bayonet coupling with the area adjacent to the recesses 155 formed in the wave spring 150.

The axial coupling just described is also useful in defining the aforementioned first rotationally-shaped coupling between the annular body 110, integral to a drive shaft, and the wave spring 150.

The aforementioned second rotationally-shaped coupling between the wave spring 150 and the sealing element 130 is achieved by inserting the outer teeth 154 of the wave spring 150 into respective outer recesses 131 of the sealing element 130.

As far as construction materials are concerned, the first embodiment is traditional and shown in figure 1. This has an annular body 110 and a sealing element 130 both made of AISI 316, a particularly corrosion-resistant steel, while the fixed part 200 is made of silicon carbide. This first traditional embodiment also includes a sealed graphite insert 600 on the sealing element 130 of the rotating part 100 to accommodate the front coupling between the rotating part 100 and the fixed part 200.

In other words, the front coupling between the rotating part 100 and the fixed part 200 occurs between the graphite insert 600 of the sealing element 130 and the silicon carbide of the fixed part 200.

The second embodiment is innovative and can be realised with the mechanical seal configuration 1 described here and is shown in figure 2. This second innovative embodiment includes an annular body 110 and a sealing element 130 made entirely of chromium steel (Y1), while the fixed part 200 is made of graphite. This would result in an integral sealing element 130 as shown in figure 2. An integral sealing element is defined as a sealing element without a graphite or silicon insert and preferably made of chromium steel. This type of sealing element, being composed of only one piece, is environmentally friendly.

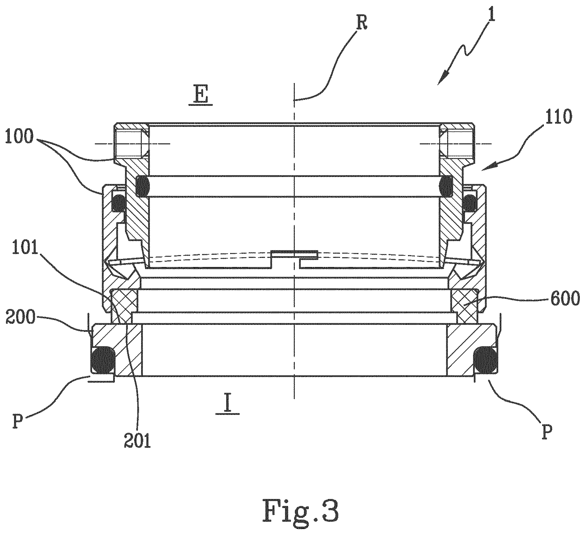

In accordance with the third embodiment of the mechanical seal 1 according to the present invention illustrated in figure 3, the axially-shaped coupling results in a bayonet coupling made by means of a housing 400 formed in the annular body 110 and a respective inner tooth 355 of the wave spring 150, illustrated in figures 5 and 8 respectively.

In particular, with reference to figure 5, the annular body 110 in a second embodiment has at least one radially pass-through inner recess 315, preferably two and diametrically opposed.

Preferably, the annular body 110 comprises an inner annular portion 317 adjacent to the annular head surface "ST" and comprising the aforementioned inner recess 315.

Even more preferably, the inner annular portion 317 has a radial thickness less than a radial thickness of the respective annular head surface "ST" and is preferably arranged proximal to the rotation axis "R".

Advantageously, the recess 315 has within it at least one appendage 315a extending in a circumferential direction with respect to the rotation axis "R", defining the circumferential housing 400. More specifically, the appendage 315a appears to be positioned proximally with respect to an annular head surface "ST".

With reference to figure 8, the wave spring 150 in a second embodiment has at least one inner tooth 355 formed in a portion of the wave spring 150 facing the rotation axis "R".

In other words, the inner tooth 355 protrudes towards the rotation axis "R". Preferably, the wave spring 150 has an inner tooth 355 for each of its waves; even more preferably, there are two such inner teeth, square in shape and diametrically opposed.

Each tooth 355 is obtained along an inner perimeter edge of the wave spring 150.

In the preferred embodiment illustrated in figure 8, the wave spring 150 has two inner teeth 355, diametrically opposite the centre of extension of the wave spring 150, and two outer teeth 154, also diametrically opposite the centre of extension of the wave spring 150 and angularly spaced 90° apart from the inner teeth 355.

Considering the mechanical seal 1 according to the present invention in its third (figure 3) embodiment, the inner tooth 355 of the wave spring 150 is configured to engage the recess 315 of the annular body 110 so as to define the aforementioned first rotationally-shaped coupling between the annular body 110, integral with a drive shaft, and the wave spring 150.

On the other hand, the circumferential housing 400 formed in the recess 315 of the annular body 110 is configured to engage the wave spring 150 at its inner tooth 355 as a result of a relative rotation between the wave spring 150 and the annular body 110, defining a bayonet coupling.

By means of this relative rotation, the appendage 315a defining the circumferential housing 400 opposes the mutual detachment of the wave spring 150 and the annular body 110, thus realising the aforementioned bayonet coupling, i.e., an axially-shaped coupling.

In other words, following a relative rotation between the wave spring 150 and the annular body 110, the appendage 315a of the annular body 110 is able to oppose the mutual axial detachment between the wave spring 150 and the annular body 110.

In other words, the housing 400 is configured to define a bayonet coupling with the wave spring 150, which is also useful to define the aforementioned first rotationally-shaped coupling between the annular body 110, integral with a drive shaft, and the wave spring 150.

The second rotationally-shaped coupling between the wave spring 150 and the sealing element 130 is achieved by inserting the outer teeth 154 of the wave spring 150 into respective outer recesses 131 of the sealing element 130.

As far as construction materials are concerned, the third embodiment is traditional and shown in figure 3. This has an annular body 110 and a sealing element 130 both made of AISI 316, a particularly corrosion-resistant steel, while the fixed part 200 is made of silicon carbide. This third traditional embodiment also includes a sealed graphite insert 600 on the sealing element 130 of the rotating part 100 to accommodate the front coupling between the rotating part 100 and the fixed part 200.

In other words, the front coupling between the rotating part 100 and the fixed part 200 occurs between the graphite insert 600 of the sealing element 130 and the silicon carbide of the stationary part 200.

A fourth embodiment not illustrated is innovative and can be implemented with the configuration of the mechanical seal 1 described herein. This fourth innovative embodiment includes an annular body 110 and a sealing element 130 made entirely of chromium steel (Y1), while the fixed part 200 is made of graphite. This would result in an integral sealing element 130. An integral sealing element is defined as a sealing element without a graphite or silicon insert and preferably made of chromium steel. This type of sealing element, being composed of only one piece, is environmentally friendly.

A further embodiment not illustrated concerns a bayonet coupling defined between the inner teeth 355 of the wave spring and the housing 400 formed in the tooth 155 of the annular body 110. In this case, the housing 400 is configured to engage the wave spring 150 at its inner tooth 355 as a result of a relative rotation between the wave spring 150 and the annular body 110 so as to define the aforementioned axially-shaped and first rotationally-shaped coupling.

The present invention achieves the proposed aim, overcoming the drawbacks complained of in the prior art.

Advantageously, the shape of the wave spring 150 and its coupling, with the annular body 110 and the sealing element 130, in particular the first and second rotationally-shaped couplings described here, allow for mutual rotational drive between the two elements.

The main purpose achieved by the mechanical seal 1 described herein relates to assembly versatility: the reversible axial constraint between annular body 110 and wave spring 150 ensures easy assembly for the operator by preventing axial separation between sealing element 130 and annular body 110, thus preventing an operator from having to repeat the assembly actions several times before reaching the correct configuration.

Even more advantageously, the curved profile of the outer teeth 154 of the spring 150 aids the operator during assembly, preventing any injuries caused by sharp edges.

Conveniently, the conformation of the coupling between the outer recesses 131 in the sealing element 130 and the outer teeth 154 of the wave spring 150 allows an even distribution of the forces generated by the wave spring 150 and transmitted to the front coupling surface between the rotating 100 and fixed 200 parts. More specifically, the spring 150, resting on the hitting shoulder 132 in an area adjacent to its outer teeth 154, generates a uniform distribution of forces that promotes homogeneous wear at the front coupling surface between the rotating 100 and fixed 200 parts. In addition, this allows the support surface of the wave spring 150 to vary consistently with the compression of the wave spring 150.

Finally, the mechanical seal 1 described here, comprising an annular body 110 and a sealing element 130 made entirely of a single material, is environmentally sustainable. In particular, the absence of the graphitic insert 600 means a saving in terms of pollution caused by the sealing material of the graphitic insert 600.

## Claims

1. Mechanical seal (1), comprising a rotating part (100) connectable to a rotating shaft and a fixed part (200) connectable to a fixed wall (P); said rotating part (100) comprising:
- an annular body (110) integrally connectable to a rotating shaft about a rotation axis (R);
- a sealing element (130) substantially coaxial with said annular body (110) and having a rotating coupling surface (101) configured to abut against a respective static coupling surface (201) of said fixed part (200); and
- elastic means comprising a wave spring (150) having a substantially annular profile, said elastic means being active between said annular body (110) and said sealing element (130) to maintain said rotating coupling surface (101) pressed against said static coupling surface (201) and to allow a mutual position adjustment along said rotation axis (R) between the annular body (110) and the sealing element (130);
- a first rotationally-shaped coupling configured to rotationally constrain said wave spring (150) to said annular body (110) about said rotation axis (R) and a second rotationally-shaped coupling configured to rotationally constrain said sealing element (130) to said wave spring (150) about said rotation axis (R),
**characterised in that it comprises**
an axially-shaped coupling configured to axially constrain said wave spring (150) and said annular body (110) so as to prevent them from disengaging from each other along said rotation axis (R), wherein said axially-shaped coupling is configured to be reversibly activated upon relative rotation between said wave spring (150) and said annular body (110).

2. Mechanical seal (1) according to claim 1, wherein said annular body (110) has at least one circumferential housing (400), preferably one for each wave defined by said wave spring (150), configured to engage said wave spring (150) following a relative rotation between said wave spring (150) and said annular body (110) defining said axially-shaped coupling.

3. Mechanical seal (1) according to claim 2, wherein said circumferential housing (400) is obtained in correspondence with at least one tooth (115) of said annular body (110), preferably one for each wave defined by said wave spring (150), wherein said tooth (115) extends axially away from an annular head surface (ST) of said annular body (110) developed about said rotation axis (R), said tooth (115) having an appendage (115a) extending in a circumferential direction with respect to said rotation axis (R) to define said circumferential housing (400).

4. Mechanical seal (1) according to claim 3 wherein said wave spring (150) has at least one axially pass-through recess (155), preferably one for each wave defined by said wave spring (150), said tooth (115) being configured to axially fit into said recess (155) so as to define said first rotationally-shaped coupling and wherein said circumferential housing (400) is configured to engage said wave spring (150) at said recess (155) following a relative rotation between said wave spring (150) and said annular body (110) so that said appendage (115a) opposes the mutual disengagement of said wave spring (150) and said annular body (110) from each other, thereby obtaining said axially-shaped coupling.

5. Mechanical seal (1) according to claim 4 wherein said recess (155) is obtained along an inner perimeter edge of said wave spring (150), in a portion of said wave spring (150) facing said rotation axis (R) and is open towards said rotation axis (R).

6. Mechanical seal (1) according to claim 3 wherein said wave spring (150) has at least one inner tooth (355), preferably one for each wave defined by said wave spring (150), protruding towards said rotation axis (R), and wherein said circumferential housing (400) is configured to engage said wave spring (150) at said inner tooth (355) following a relative rotation between said wave spring (150) and said annular body (110) so as to define said first rotationally-shaped coupling and said axially-shaped coupling.

7. Mechanical seal (1) according to one or more of the preceding claims wherein said tooth (115) has a radial thickness lower than a radial thickness of the annular end surface (ST) of said annular body (110), said tooth (115) being preferably arranged proximal to said rotation axis (R).

8. Mechanical seal (1) according to claim 2, wherein:
- said circumferential housing (400) is obtained in correspondence of at least one radially pass-through inner recess (315) of said annular body (110), preferably one for each wave of said wave spring (150), said inner recess (315) having an appendage (315a) extending in a circumferential direction with respect to said rotation axis (R) within said inner recess (315) to define said circumferential housing (400),
- said wave spring (150) has at least one inner tooth (355), preferably one for each wave defined by said wave spring (150), protruding towards said rotation axis (R) and configured to engage said inner recess (315) so as to define said first rotationally-shaped coupling;
- said circumferential housing (400) is configured to engage said wave spring (150) at said inner tooth (355) following a relative rotation between said wave spring (150) and said annular body (110) so that said appendage (315a) opposes the disengagement of said wave spring (150) and said annular body (110) from each other, thereby obtaining said axially-shaped coupling.

9. Mechanical seal (1) according to claim 8 wherein said annular body (110) comprises an inner annular portion (317) adjacent to said annular head surface (ST) and comprising said inner recess (315), said annular portion (317) having a radial thickness lower than a radial thickness of said annular head surface (ST) and being preferably arranged proximal to said rotation axis (R).

10. Mechanical seal (1) according to claims 8 and 9 wherein said inner recess (315) is obtained along an inner perimeter edge of said annular portion (317).

11. Mechanical seal (1) according to one or more of the preceding claims, wherein said sealing element (130) is rotationally constrained to said annular body (110) only by means of said wave spring (150).

12. Mechanical seal (1) according to one or more of the preceding claims, wherein said sealing element (130) has at least one outer recess (131), preferably one for each wave of said wave spring (150), and wherein said wave spring (150) has at least one outer tooth (154), preferably one for each wave of said wave spring (150), protruding away from said rotation axis (R) and configured to engage said outer recess (131) to define said second rotationally-shaped coupling.

13. Mechanical seal (1) according to claim 12, wherein said outer recess (131) has a depth greater than the radial extension of said outer tooth (154); said outer tooth (154) having a curvilinear profile.

14. Mechanical seal (1) according to one or more of the preceding claims, wherein said sealing element (130) has a hitting shoulder (132) configured to abut against respective ends of said wave spring (150), said outer recess (131) being formed partially at the hitting shoulder (132) and partially at an annular surface (133) adjacent to the hitting shoulder (132) and inclined with respect to said hitting shoulder (132).

15. Mechanical seal (1) according to one or more of the preceding claims, wherein said sealing element (130) has a substantially cylindrical mouth (134), said annular body (110) having a lateral surface distal (SD) from said rotation axis (R) slidably fitted into said mouth (134), wherein said annular head surface (ST) of said annular body (110) is configured to abut against respective ends of said wave spring (150).

16. Mechanical seal (1) according to one or more of the preceding claims, wherein said sealing element (130) has an annular groove (135) internally facing said rotation axis (R) and configured to house said wave spring (150), preferably said annular groove (135) having an axial dimension, measured parallel to said rotation axis (R), equal to or less than a maximum axial dimension of the wave spring (150) in an unloaded condition.

17. Mechanical seal (1) according to claim 16 wherein said annular groove (135) is defined between said containment shoulder (137) and a hitting shoulder (132); said hitting shoulder (132) being inclined with respect to a plane (X) orthogonal to said rotation axis (R) by an angle of between 5° and 15°, preferably equal to 10°, said wave spring engaging within said annular groove.

18. Mechanical seal (1) according to claims 15 and 16, wherein said side surface distal (SD) from said rotation axis (R) of said annular body (110) is facing said annular groove (135) to define an at least partially closed housing volume (V) for said wave spring (150), said rotating part (100) comprising sealing means (160) interposed between said annular body (110) and said sealing element (130) to seal said housing volume (V).

## Patentansprüche

1. Gleitringdichtung (1), umfassend einen rotierenden Teil (100), der mit einer rotierenden Welle verbunden werden kann, und einen festen Teil (200), der mit einer festen Wand (P) verbunden werden kann; wobei der rotierende Teil (100) Folgendes umfasst:
- einen ringförmigen Körper (110), der um eine Drehachse (R) fest mit einer rotierenden Welle verbunden werden kann;
- ein Dichtungselement (130), das im Wesentlichen koaxial zu dem genannten ringförmigen Körper (110) ist und eine rotierende Kupplungsfläche (101) aufweist, die darauf ausgelegt ist, an einer entsprechenden statischen Kupplungsfläche (201) des genannten festen Teils (200) anzuliegen; und
- elastische Mittel, die eine Wellenfeder (150) mit einem im Wesentlichen ringförmigen Profil umfassen, wobei die genannten elastischen Mittel zwischen dem genannten ringförmigen Körper (110) und dem genannten Dichtungselement (130) wirken, um die genannte rotierende Kupplungsfläche (101) gegen die genannte statische Kupplungsfläche (201) gedrückt zu halten und eine gegenseitige Positionsanpassung entlang der genannten Drehachse (R) zwischen dem ringförmigen Körper (110) und dem Dichtungselement (130) zu ermöglichen;
- eine erste drehbar geformte Kupplung, die darauf ausgelegt ist, die genannte Wellenfeder (150) um die genannte Drehachse (R) drehbar an dem genannten ringförmigen Körper (110) zu halten, und eine zweite drehbar geformte Kupplung, die darauf ausgelegt ist, das genannte Dichtungselement (130) um die genannte Drehachse (R) drehbar an der genannten Wellenfeder (150) zu halten,
**dadurch gekennzeichnet, dass sie Folgendes umfasst**
eine axial geformte Kupplung, die darauf ausgelegt ist, die genannte Wellenfeder (150) und den genannten ringförmigen Körper (110) axial zurückzuhalten, um zu vermeiden, dass sie sich entlang der genannten Drehachse (R) voneinander lösen, wobei die genannte axial geformte Kupplung darauf ausgelegt ist, bei einer relativen Drehung zwischen der genannten Wellenfeder (150) und dem genannten ringförmigen Körper (110) reversibel aktiviert zu werden.

2. Gleitringdichtung (1) nach Anspruch 1, wobei der genannte ringförmige Körper (110) mindestens ein Umfangsgehäuse (400) aufweist, vorzugsweise eines für jede von der genannten Wellenfeder (150) definierte Welle, das darauf ausgelegt ist, nach einer relativen Drehung zwischen der genannten Wellenfeder (150) und dem genannten ringförmigen Körper (110), die genannte Wellenfeder (150 in Eingriff zu bringen und die genannte axial geformte Kupplung zu definieren.

3. Gleitringdichtung (1) nach Anspruch 2, wobei das genannte Umfangsgehäuse (400) in Übereinstimmung mit mindestens einem Zahn (115) des genannten ringförmigen Körpers (110) erzielt wird, vorzugsweise einem für jede von der genannten Wellenfeder (150) definierte Welle, wobei der genannte Zahn (115) axial von einer ringförmigen Kopffläche (ST) des genannten ringförmigen Körpers (110) weg verläuft, die um die genannte Drehachse (R) verläuft, wobei der genannte Zahn (115) einen Vorsprung (115a) aufweist, der im Verhältnis zu der genannten Drehachse (R) in einer Umfangsrichtung verläuft, um das genannte Umfangsgehäuse (400) zu definieren.

4. Gleitringdichtung (1) nach Anspruch 3, wobei die genannte Wellenfeder (150) mindestens eine axial durchgehende Aussparung (155) aufweist, vorzugsweise eine für jede von der genannten Wellenfeder (150) definierte Welle, wobei der genannte Zahn (115) darauf ausgelegt ist, axial in die genannte Aussparung (155) zu passen, um die genannte erste drehbar geformte Kupplung zu definieren, und wobei das genannte Umfangsgehäuse (400) darauf ausgelegt ist, nach einer relativen Drehung zwischen der genannte Wellenfeder (150) und dem genannten ringförmigen Körper (110) mit der genannten Wellenfeder (150) an der genannten Aussparung (155) in Eingriff zu gelangen, so dass der genannte Vorsprung (115a) dem Lösen der genannten Wellenfeder (150) und des genannten ringförmigen Körpers (110) voneinander entgegenwirkt und so die genannte axial geformte Kupplung erzielt wird.

5. Gleitringdichtung (1) nach Anspruch 4, wobei die genannte Aussparung (155) entlang einer inneren Umfangskante der genannten Wellenfeder (150) in einem Abschnitt der genannten Wellenfeder (150) erzielt wird, der der genannten Drehachse (R) gegenüberliegt und in Richtung der genannten Drehachse (R) offen ist.

6. Gleitringdichtung (1) nach Anspruch 3, wobei die genannte Wellenfeder (150) mindestens einen inneren Zahn (355), vorzugsweise einen für jede von der genannten Wellenfeder (150) definierte Welle, aufweist, der in Richtung der genannten Drehachse (R) vorsteht, und wobei das genannte Umfangsgehäuse (400) darauf ausgelegt ist, nach einer relativen Drehung zwischen der genannten Wellenfeder (150) und dem genannten ringförmigen Körper (110) an dem genannten inneren Zahn (355) in die genannte Wellenfeder (150) einzugreifen, um die genannte erste drehbar geformte Kupplung und die genannte axial geformte Kupplung zu definieren.

7. Gleitringdichtung (1) nach einem oder mehreren der vorangegangenen Ansprüche, wobei der genannte Zahn (115) eine geringere radiale Stärke als die radiale Stärke der ringförmigen Endfläche (ST) des genannten ringförmigen Körpers (110) aufweist, wobei der genannte Zahn (115) vorzugsweise proximal zu der genannten Drehachse (R) angeordnet ist.

8. Gleitringdichtung (1) nach Anspruch 2, wobei:
- das genannte Umfangsgehäuse (400) in Übereinstimmung mit mindestens einer radial durchgehenden inneren Aussparung (315) des genannten ringförmigen Körpers (110) erzielt wird, vorzugsweise eine für jede Welle der genannten Wellenfeder (150), wobei die genannte innere Aussparung (315) eine Erweiterung (315a) aufweist, die im Verhältnis zu der genannten Drehachse (R) innerhalb der genannten inneren Aussparung (315) in einer Umfangsrichtung verläuft, um das genannte Umfangsgehäuse (400) zu definieren,
- wobei die genannte Wellenfeder (150) mindestens einen inneren Zahn (355) aufweist, vorzugsweise einen für jede von der genannten Wellenfeder (150) definierte Welle, der in Richtung der genannten Drehachse (R) vorsteht und darauf ausgelegt ist, in die genannte innere Aussparung (315) einzugreifen, um die genannte erste drehbar geformte Kupplung zu definieren;
- wobei das genannte Umfangsgehäuse (400) darauf ausgelegt ist, mit der genannten Wellenfeder (150) an dem genannten inneren Zahn (355) nach einer relativen Drehung zwischen der genannten Wellenfeder (150) und dem genannten ringförmigen Körper (110) in Eingriff zu gelangen, so dass die genannte Erweiterung (315a) dem Lösen der genannten Wellenfeder (150) und des genannten ringförmigen Körpers (110) voneinander entgegenwirkt, wodurch die genannte axial geformte Kupplung erzielt wird.

9. Gleitringdichtung (1) nach Anspruch 8, wobei der genannte ringförmige Körper (110) einen inneren ringförmigen Abschnitt (317) umfasst, der an die genannte ringförmige Kopffläche (ST) angrenzt und die genannte innere Aussparung (315) umfasst, wobei der genannte ringförmige Abschnitt (317) eine geringere radiale Stärke als die radiale Stärke der genannten ringförmigen Kopffläche (ST) aufweist und vorzugsweise proximal zu der genannten Drehachse (R) angeordnet ist.

10. Gleitringdichtung (1) nach Anspruch 8 und 9, wobei die genannte innere Aussparung (315) entlang einer inneren Umfangskante des genannten ringförmigen Abschnitts (317) erzielt wird.

11. Gleitringdichtung (1) nach einem oder mehreren der vorangegangenen Ansprüche, wobei das genannte Dichtungselement (130) nur mittels der genannten Wellenfeder (150) drehbar an dem genannten ringförmigen Körper (110) gehalten wird.

12. Gleitringdichtung (1) nach einem oder mehreren der vorangegangenen Ansprüche, wobei das genannte Dichtungselement (130) mindestens eine äußere Aussparung (131), vorzugsweise eine für jede Welle der genannten Wellenfeder (150), aufweist, und wobei die genannte Wellenfeder (150) mindestens einen äußeren Zahn (154), vorzugsweise einen für jede Welle der genannten Wellenfeder (150), aufweist, der von der genannten Drehachse (R) vorsteht und darauf ausgelegt ist, in die genannte äußere Aussparung (131) einzugreifen, um die genannte zweite drehbar geformte Kupplung zu definieren.

13. Gleitringdichtung (1) nach Anspruch 12, wobei die genannte äußere Aussparung (131) eine größere Tiefe als die radiale Ausdehnung des genannten äußeren Zahns (154) aufweist; wobei der genannte äußere Zahn (154) ein kurvenförmiges Profil aufweist.

14. Gleitringdichtung (1) nach einem oder mehreren der vorangegangenen Ansprüche, wobei das genannte Dichtungselement (130) eine Anschlagschulter (132) aufweist, die darauf ausgelegt ist, an den jeweiligen Enden der genannten Wellenfeder (150) anzuschlagen, wobei die genannte äußere Aussparung (131) teilweise an der Anschlagschulter (132) und teilweise an einer ringförmigen Oberfläche (133) ausgebildet ist, die an die Anschlagschulter (132) angrenzt und im Verhältnis zu der genannten Anschlagschulter (132) geneigt ist.

15. Gleitringdichtung (1) nach einem oder mehreren der vorangegangenen Ansprüche, wobei das genannte Dichtungselement (130) eine im Wesentlichen zylindrische Mündung (134) aufweist, wobei der genannte ringförmige Körper (110) eine von der genannten Drehachse (R) distale Seitenfläche (SD) aufweist, die verschiebbar in die genannte Mündung (134) eingepasst ist, wobei die genannte ringförmige Kopffläche (ST) des genannten ringförmigen Körpers (110) darauf ausgelegt ist, an den jeweiligen Enden der genannten Wellenfeder (150) anzuliegen.

16. Gleitringdichtung (1) nach einem oder mehreren der vorangegangenen Ansprüche, wobei das genannte Dichtungselement (130) eine ringförmige Nut (135) aufweist, die der genannten Drehachse (R) innen zugewandt und darauf ausgelegt ist, die genannte Wellenfeder (150) aufzunehmen, wobei die genannte ringförmige Nut (135), parallel zu der genannten Drehachse (R) gemessen, vorzugsweise eine axiale Abmessung aufweist, die höchstens einer maximalen axialen Abmessung der Wellenfeder (150) in einem unbelasteten Zustand entspricht.

17. Gleitringdichtung (1) nach Anspruch 16, wobei die genannte ringförmige Nut (135) zwischen der genannten Eingrenzungsschulter (137) und einer Anschlagschulter (132) definiert ist; wobei die genannte Anschlagschulter (132) im Verhältnis zu einer Ebene (X) senkrecht zu der genannten Drehachse (R) um einen Winkel zwischen 5° und 15°, vorzugsweise von 10°, geneigt ist und die genannte Wellenfeder in die genannte ringförmige Nut eingreift.

18. Gleitringdichtung (1) nach Anspruch 15 und 16, wobei die zu der genannten Drehachse (R) des genannten ringförmigen Körpers (110) distale Seitenfläche (SD) der genannten ringförmigen Nut (135) gegenüberliegt, um ein zumindest teilweise geschlossenes Gehäusevolumen (V) für die genannte Wellenfeder (150) zu definieren, wobei der genannte rotierende Teil (100) Dichtungsmittel (160) umfasst, die zwischen dem genannten ringförmigen Körper (110) und dem genannten Dichtungselement (130) eingefügt sind, um das genannte Gehäusevolumen (V) abzudichten.

## Revendications

1. Joint mécanique (1), comprenant une partie rotative (100) pouvant être reliée à un arbre rotatif et une partie fixe (200) pouvant être reliée à une paroi fixe (P) ; ladite partie rotative (100) comprenant :
- un corps annulaire (110) pouvant être relié intégralement à un arbre rotatif autour d'un axe de rotation (R) ;
- un élément d'étanchéité (130) sensiblement coaxial audit corps annulaire (110) et comportant une surface de couplage rotative (101) configurée pour venir en butée contre une surface de couplage statique respective (201) de ladite partie fixe (200) ; et
- des moyens élastiques comprenant un ressort ondulé (150) ayant un profil sensiblement annulaire, lesdits moyens élastiques étant actifs entre ledit corps annulaire (110) et ledit élément d'étanchéité (130) pour maintenir ladite surface de couplage rotative (101) pressée contre ladite surface de couplage statique (201) et pour permettre un ajustement de position mutuel le long dudit axe de rotation (R) entre le corps annulaire (110) et l'élément d'étanchéité (130) ;
- un premier couplage rotatif configuré pour contraindre de manière rotative ledit ressort ondulé (150) audit corps annulaire (110) autour dudit axe de rotation (R) et un second couplage rotatif configuré pour contraindre de manière rotative ledit élément d'étanchéité (130) audit ressort ondulé (150) autour dudit axe de rotation (R),
**caractérisé en ce qu'il comprend**
un couplage axial configuré pour contraindre de manière axiale ledit ressort ondulé (150) et ledit corps annulaire (110) de manière à les empêcher de se désengager l'un de l'autre le long dudit axe de rotation (R), ledit couplage axial étant configuré pour être activé de manière réversible lors de la rotation relative entre ledit ressort ondulé (150) et ledit corps annulaire (110).

2. Joint mécanique (1) selon la revendication 1, dans lequel ledit corps annulaire (110) présente au moins un logement circonférentiel (400), de préférence un pour chaque onde définie par ledit ressort ondulé (150), configuré pour engager ledit ressort ondulé (150) suite à une rotation relative entre ledit ressort ondulé (150) et ledit corps annulaire (110) définissant ledit couplage axial.

3. Joint mécanique (1) selon la revendication 2, dans lequel ledit logement circonférentiel (400) est obtenu en correspondance avec au moins une dent (115) dudit corps annulaire (110), de préférence une pour chaque onde définie par ledit ressort ondulatoire (150), dans lequel ladite dent (115) s'étend axialement à l'écart d'une surface de tête annulaire (ST) dudit corps annulaire (110) développée autour dudit axe de rotation (R), ladite dent (115) présentant un appendice (115a) s'étendant dans une direction circonférentielle par rapport audit axe de rotation (R) pour définir ledit logement circonférentiel (400).

4. Joint mécanique (1) selon la revendication 3, dans lequel ledit ressort ondulé (150) présente au moins un évidement de passage axial (155), de préférence un pour chaque onde définie par ledit ressort ondulé (150), ladite dent (115) étant configurée pour s'insérer axialement dans ledit évidement (155) de manière à définir ledit premier couplage rotatif et dans lequel ledit logement circonférentiel (400) est configuré pour engager ledit ressort ondulé (150) au niveau dudit évidement (155) suite à une rotation relative entre ledit ressort ondulé (150) et ledit corps annulaire (110) de manière à ce que ledit appendice (115a) s'oppose au désengagement mutuel l'un par rapport à l'autre dudit ressort ondulé (150) et dudit corps annulaire (110), obtenant ainsi ledit couplage axial.

5. Joint mécanique (1) selon la revendication 4, dans lequel ledit évidement (155) est obtenu le long d'un bord périmétrique intérieur dudit ressort ondulé (150), dans une portion dudit ressort ondulé (150) orientée vers ledit axe de rotation (R) et est ouvert vers ledit axe de rotation (R).

6. Joint mécanique (1) selon la revendication 3 dans lequel ledit ressort ondulé (150) présente au moins une dent intérieure (355), de préférence une pour chaque onde définie par ledit ressort ondulé (150), faisant saillie vers ledit axe de rotation (R), et dans lequel ledit logement circonférentiel (400) est configuré pour engager ledit ressort ondulé (150) au niveau de ladite dent intérieure (355) suite à une rotation relative entre ledit ressort ondulé (150) et ledit corps annulaire (110) de manière à définir ledit premier couplage rotatif et ledit couplage axial.

7. Joint mécanique (1) selon l'une ou plusieurs des revendications précédentes, dans lequel ladite dent (115) a une épaisseur radiale inférieure à une épaisseur radiale de la surface d'extrémité annulaire (ST) dudit corps annulaire (110), ladite dent (115) étant de préférence agencée de façon proximale audit axe de rotation (R).

8. Joint mécanique (1) selon la revendication 2, dans lequel :
- ledit logement circonférentiel (400) est obtenu en correspondance avec au moins un évidement intérieur radialement de passage radial (315) dudit corps annulaire (110), de préférence un pour chaque onde dudit ressort ondulé (150), ledit évidement intérieur (315) comportant un appendice (315a) s'étendant dans une direction circonférentielle par rapport audit axe de rotation (R) à l'intérieur dudit évidement intérieur (315) pour définir ledit logement circonférentiel (400),
- ledit ressort ondulé (150) présente au moins une dent intérieure (355), de préférence une pour chaque onde définie par ledit ressort ondulé (150), faisant saillie vers ledit axe de rotation (R) et configuré pour engager ledit évidement intérieur (315) de manière à définir ledit premier couplage rotatif ;
- ledit logement circonférentiel (400) est configuré pour engager ledit ressort ondulé (150) au niveau de ladite dent intérieure (355) suite à une rotation relative entre ledit ressort ondulé (150) et ledit corps annulaire (110) de sorte que ledit appendice (315a) s'oppose au désengagement l'un par rapport à l'autre dudit ressort ondulé (150) et dudit corps annulaire (110), obtenant ainsi ledit couplage axial.

9. Joint mécanique (1) selon la revendication 8, dans lequel ledit corps annulaire (110) comprend une portion annulaire intérieure (317) adjacente à ladite surface de tête annulaire (ST) et comprenant ledit évidement intérieur (315), ladite portion annulaire (317) ayant une épaisseur radiale inférieure à une épaisseur radiale de ladite surface de tête annulaire (ST) et étant de préférence agencée de façon proximale audit axe de rotation (R).

10. Joint mécanique (1) selon les revendications 8 et 9, dans lequel le évidement intérieur (315) est obtenu le long d'un bord périmétrique intérieur de la portion annulaire (317).

11. Joint mécanique (1) selon l'une ou plusieurs des revendications précédentes, dans lequel ledit élément d'étanchéité (130) est contraint en rotation audit corps annulaire (110) uniquement au moyen dudit ressort ondulé (150).

12. Joint mécanique (1) selon l'une ou plusieurs des revendications précédentes, dans lequel ledit élément d'étanchéité (130) présente au moins un évidement extérieur (131), de préférence un pour chaque onde dudit ressort ondulé (150), et dans lequel ledit ressort ondulé (150) présente au moins une dent extérieure (154), de préférence une pour chaque onde dudit ressort ondulé (150), faisant saillie à l'écart dudit axe de rotation (R) et configurée pour engager ledit évidement extérieur (131) afin de définir ledit second couplage rotatif.

13. Joint mécanique (1) selon la revendication 12, dans lequel ledit évidement extérieur (131) a une profondeur supérieure à l'extension radiale de ladite dent extérieure (154) ; ladite dent extérieure (154) a un profil curviligne.

14. Joint mécanique (1) selon l'une ou plusieurs des revendications précédentes, dans lequel ledit élément d'étanchéité (130) présente un épaulement de frappe (132) configuré pour venir en butée contre les extrémités respectives dudit ressort ondulé (150), ledit évidement extérieur (131) étant formé en partie au niveau de l'épaulement de frappe (132) et en partie au niveau d'une surface annulaire (133) adjacente à l'épaulement de frappe (132) et inclinée par rapport audit épaulement de frappe (132).

15. Joint mécanique (1) selon l'une ou plusieurs des revendications précédentes, dans lequel ledit élément d'étanchéité (130) a une embouchure sensiblement cylindrique (134), ledit corps annulaire (110) ayant une surface latérale distale (SD) par rapport audit axe de rotation (R) insérée de manière coulissante dans ladite embouchure (134), dans lequel ladite surface de tête annulaire (ST) dudit corps annulaire (110) est configurée pour venir en butée contre les extrémités respectives dudit ressort ondulé (150).

16. Joint mécanique (1) selon l'une ou plusieurs des revendications précédentes, dans lequel ledit élément d'étanchéité (130) présente une rainure annulaire (135) faisant face intérieurement audit axe de rotation (R) et configurée pour loger ledit ressort ondulé (150), de préférence ladite rainure annulaire (135) ayant une dimension axiale, mesurée parallèlement audit axe de rotation (R), égale ou inférieure à une dimension axiale maximale du ressort ondulé (150) à l'état déchargé.

17. Joint mécanique (1) selon la revendication 16 dans lequel ladite rainure annulaire (135) est définie entre ledit épaulement de confinement (137) et un épaulement de frappe (132) ; ledit épaulement de frappe (132) étant incliné par rapport à un plan (X) orthogonal audit axe de rotation (R) d'un angle compris entre 5° et 15°, de préférence égal à 10°, ledit ressort ondulé s'engageant à l'intérieur de ladite rainure annulaire.

18. Joint mécanique (1) selon les revendications 15 et 16, dans lequel ladite surface latérale distale (SD) par rapport audit axe de rotation (R) dudit corps annulaire (110) fait face à ladite rainure annulaire (135) pour définir un volume de logement (V) au moins partiellement fermé pour ledit ressort ondulé (150), ladite partie rotative (100) comprenant des moyens d'étanchéité (160) interposés entre ledit corps annulaire (110) et ledit élément d'étanchéité (130) pour sceller de manière étanche ledit volume de logement (V).
